Europäisches Patentamt

European Patent Office

Office européen des brevets

(11) Veröffentlichungsnummer: **0 047 812**
**B1**

(12) **EUROPÄISCHE PATENTSCHRIFT**

(45) Veröffentlichungstag der Patentschrift: **03.04.85**

(21) Anmeldenummer: **81103939.5**

(22) Anmeldetag: **22.05.81**

(51) Int. Cl.⁴: **H 02 P 7/00**

(54) **Verfahren zur elektronischen Betätigung und Überwachung des Öffnungs- und Schliesszyklusses von elektrisch betätigbaren Aggregaten, wie beispielsweise Fensterheber und elektrischen Schiebedächern, insbesondere von Kraftfahrzeugen sowie eine elektrische Schaltungsanordnung zur Durchführung des Verfahrens.**

(30) Priorität: **11.09.80 DE 3034118**

(43) Veröffentlichungstag der Anmeldung:
**24.03.82 Patentblatt 82/12**

(45) Bekanntmachung des Hinweises auf die
Patenterteilung:
**03.04.85 Patentblatt 85/14**

(84) Benannte Vertragsstaaten:
**FR GB SE**

(56) Entgegenhaltungen:
**DE-A-2 739 237**
**DE-A-2 902 683**
**US-A-3 815 005**

(73) Patentinhaber: **Leopold Kostal GmbH & Co. KG**
**Wiesenstrasse 47**
**D-5880 Lüdenscheid (DE)**

(72) Erfinder: **Bergmann, Eduard**
**Altenaer Strasse 1**
**D-5880 Lüdenscheid (DE)**
Erfinder: **Kinzl, Marwin**
**Sessinghausen 16**
**D-5883 Kierspe 1 (DE)**

(74) Vertreter: **Köchling, Conrad, Dipl.-Ing. et al**
**Patentanwälte, Dipl.-Ing. Conrad Köchling Dipl.-**
**Ing. Conrad-Joachim Köchling Fleyer Strasse**
**135**
**D-5800 Hagen 1 (DE)**

## Beschreibung

Die Erfindung betrifft ein Verfahren zur elektronischen Überwachung und Beeinflussung des Öffnungsbzw. Schließzyklusses von elektrisch betriebenen Aggregaten, wie beispielsweise Fensterheber und Schiebedächer, insbesondere von Kraftfahrzeugen, wobei das an das gleichspannungsgespeiste Bordnetz angeschlossene elektrische Stellorgan des Aggregates entweder über insbesondere als Tastschalter ausgebildete elektrische Bedienelemente oder über spezifische Größen des Aggregates erfassende und verarbeitende elektrische bzw. elektronische Bauelemente beeinflußbar ist, sowie eine Schaltungsanordnung zur Durchführung des Verfahrens.

Hauptaufgabe des nachstehend beschriebenen, insbesondere als Fernsterheber ausgebildeten Aggregates, ist es, die Sicherheitsmängel (Einklemmen gefährdeter Körperteile, wie Hals, Kopf, Finger usw.) der heutigen elektrisch betriebenen Aggregate, insbesondere Fensterheber (FH), abzubauen.

Bei dem bislang in Kraftfahrzeugen (KFA) angewandten, zum Beispiel gemäß der US—PS 28 81 378 aufgebauten elektrischen FH besteht die Gefahr, daß Kfz.-Insassen (z.B. Kinder) durch das sich schließende Fenster verletzt werden.

Abgeschaltet wird das Stellorgan des FH nur durch Loslassen des betreffenden Tastschalters oder durch den sich bei Überlast öffnenden Bimetall-Schalter des Stellorganes. Das System als solches ist dann zwar abgeschaltet, aber durch die unverändert bleibende Position der Scheibe wird die Verletzungsgefahr, je nachdem ob Hals, Kopf, Finger usw. eingeklemmt sind, noch wesentlich vergrößert.

Insbesondere besteht bei einer Einklemmung des Halses die Gefahr der Strangulation.

Ein weiterer Nachteil bei dem heutigen elektrischen FH entsteht dadurch, daß, um das Fenster vollständig zu schließen oder zu öffnen, ein Tastschalter während des gesamten Bewegungszyklusses betätigt werden muß.

Da das Stellorgan bzw. der zugehörige Motor bei diesem System direkt über die Tastschalter beeinflußt wird, müssen diese also die gesamte Leistung schalten.

Es wurde schon eine Verbesserung des heutigen elektrischen Systems vorgeschlagen (DE—AS 11 30 731), wobei eine zusätzliche Messung des vom Motor des Stellorganes aufgenommenen Stromes erfolgen sollte.

Der Stromanstieg, der beim Einklemmen gefährdeter Körperteile auftritt, sollte als Abschaltkriterium dienen. Dadurch sollte dann eine höhere Sicherheit erreicht werden. Problem der reinen Strommessung ist jedoch, die vielen, sich ändernden Größen, die den Strom selbst beeinflussen, zu berücksichtigen. Diese sind:

Die schwankende Versorgungsspannung (Versorgungsspannungsbereich) Die Eigenerwärmung des Motors.

Die sich durch die festliegenden Gegebenheiten des FH z.B. durch die Krümmung des Fensters ändernde Belastung des FH-Motors.

Da die Gegebenheiten, z.B. die Position des Fensters nicht erfaßt werden, kann durch den Stromanstieg nicht unterschieden werden, ob gefährdete Körperteile eingeklemmt werden oder ob das Fenster in die Gummidichtung fährt (Schließlage).

Diese aufgeführten Kriterien bringen in Bezug auf die Sicherheit des elektrischen FH mit Strommessung zwei Möglichkeiten:

Entweder erfolgt eine sichere Abschaltung und damit Schutz gegen eingeklemmte Körperteile. Dann bleibt aber das Problem, daß das Fenster nicht vollständig geschlossen werden kann.

Oder es erfolgt eine unsichere Abschaltung und damit ein verminderter Schutz gegen eingeklemmte Körperteile.

Dann ist aber ein vollständiges Schließen des Fensters möglich.

Durch die DE—OS 29 02 683 ist zwar ein FH-System bekanntgeworden, bei dem zusätzlich zur Strommessung eine Erfassung der Position der Fensterscheibe über eine Sensoreinrichtung vorgenommen wird und bei dem die ermittelten Werte von einem zugeordneten Mikrocomputer verarbeitet und zur Beeinflussung des Öffnungsbzw. Schließzyklusses herangezogen werden.

Bei diesem FH-System werden aber ebenfalls die den Strom beeinflussenden statischen und dynamischen Größen nicht berücksichtigt, so daß auch damit ein einwandfreier Betrieb bei gleichzeitiger optimaler Sicherheit nicht zu gewährleisten ist.

Der Erfindung liegt hiervon ausgehend die Aufgabe zugrunde, verfahrens- und schaltungsmäßig ein System zu schaffen, bei dem mit noch größerer Sicherheit als bisher sowohl ein gefährliches Einklemmen von Körperteilen ausgeschlossen als auch ein vollständiges Öffnen und Schließen des Fensters automatisch möglich ist.

Das FH-System ist beispielsweise genannt. Bei elektrischen Schiebedächern besteht die gleiche Problematik.

Die Lösung dieser Aufgabe ist in den Patentansprüchen definiert.

Das erfindungsgemäße elektronische FH-System mißt die Geschwindigkeit des FH-Motors (mittelbar oder unmittelbar) und bildet insbesondere aus dem ersten erhaltenen Meßwert einen Grenzwert, der dann mit allen nachfolgenden Meßwerten verglichen wird.

In diesem Grenzwert sind alle momentanen, sich über die gesamte Betriebszeit des FH-Systems ändernden elektrischen und mechanischen Größen, wie Eigenerwärmung des FH-Motors, Höhe der Batteriespannung und Position der Fensterscheibe usw. sowie die statischen Gegebenheiten des FH-Systems, wie beispielsweise die Krümmung der Fensterscheibe berücksichtigt. Die Verarbeitung und Aufnahme der Meßwerte erfolgt durch einen Mikrocomputer. Die Geschwindigkeitsmessung selbst kann über eine Lochscheibe und lichtelektrische Elemente, Hall-Generator oder ähnliche Sensorelemente, die im FH-Motor unter- oder am FH-Motor angebracht sind, erfolgen.

Die Sensoreinrichtung kann sich auch im oder am mechanischen Hebesytem des Stellorganes befinden.

Desweiteren kann durch Aufbringen eines Rasters in des Fensterscheibe in Verbindung mit optoelektronischen Sensorelementen die Geschwindigkeitsmessung erfolgen. Die Anzahl der Wechsel je Zeiteinheit, die die Sensoreinrichtung liefert, sind ein Maß für die Geschwindigkeit des FH-Motors.

Diese Wechsel werden von Mikrocomputer laufend eingelesen und weiterverarbeitet.

Die Wechsel, die die Sensoreinrichtung liefert, erfüllen bei diesem System noch eine zweite wichtige Aufgabe. Die Anzahl der Wechsel insgesamt, dient dazu, die Position des Fensters zu bestimmen.

Diese Positionserkennung ermöglicht es, -im Gefahrenfall- sicher abzuschalten und das Fenster wieder zu öffnen und -im Normalfall- das Fenster trotzdem vollständig zu schließen.

Durch die DE—OS 27 39 237 ist es zwar im Zusammenhang mit elektrischen betriebenen Aggregaten bekanntgeworden, die Drehzahl des zugehörigen Motors zu erfassen und aus Sicherheitsgründen mit einem vorgegebenen Wert zu vergleichen. Dieser Wert ist unabhängig vonden den Strom beeinflussenden Parametern (Reibungsbeiwert der Schlupf-Kupplung, Spannung), so daß eine Gefährdung von Personen bei einer möglichen Einklemmung derselben nicht auszuschließen ist.

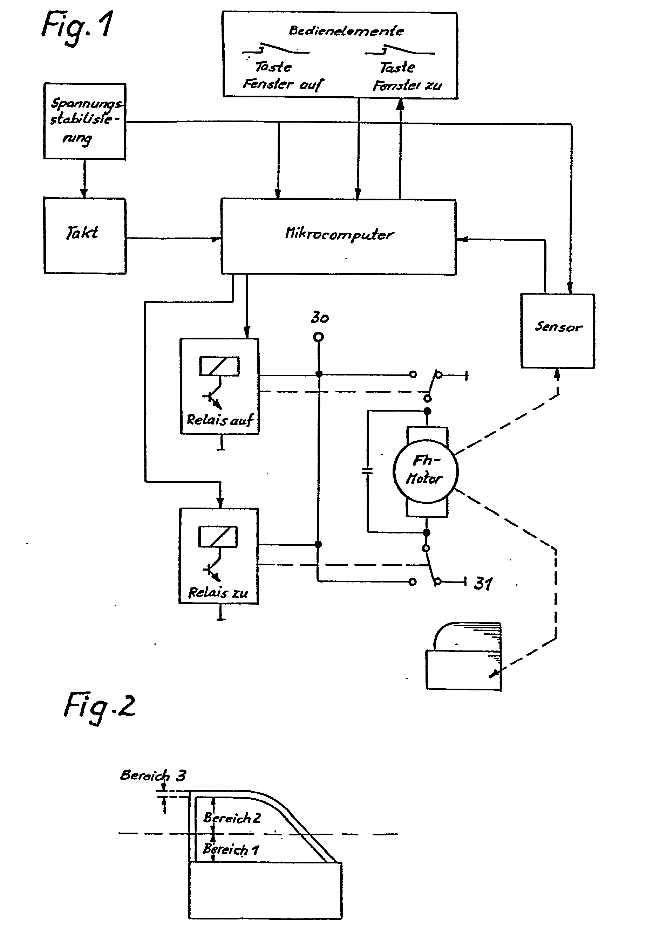

Zum besseren Verständnis ist in der Zeichnung ein Blockschaltbild eines elektronischen FH-Systems gemäß der Erfindung dargestellt (Fig. 1). Desweiteren sind die Bereiche am Beispiel einer schematischen KFA-Tür dargestellt (Fig. 2).

Nach Anklemmen der Bordbatterie (Anschlüsse 30, 31) bezeichnet der Mikrocomputer die momentane Position der Scheibe als Zustand "Fenster zu" und setzt den Positionszähler auf den Wert 0.

Wird die Scheibe nun bewegt, so liefert die Sensoreinrichtung von der Bewegungsrichtung abhängige Signalwechsel, die der Mikrocomputer entsprechend der Drehrichtung addiert oder subtrahiert. Wird das Fenster geöffnet, so werden die Wechsel addiert. Wird das Fenster wieder geschlossen, so werden die Wechsel der Sensoreinrichtung wieder subtrahiert.

Ausgehend von der Position "Fenster auf" durchläuft die Fensterscheibe während des Schließvorganges 3 Bereiche (Bereiche 1, 2 und 3).

Hierbei sind die Bereiche 1 und 3 solche Bereiche, in denen der Motor außer durch entsprechende Betätigung der Bedienelemente nur dann abgeschaltet wird, wenn er für eine bestimmte (kurze) Zeit im blockierten Zustand gewesen ist.

Diese definierte Blockierzeit wird von einem einstellbaren Blockierzähler vorgegeben und bei Überschreitung der Blockierzeit erfolgt die Abschaltung des FH-Motors. Dies tritt dann in Kraft, wenn von der Sensoreinrichtung keine Wechsel mehr kommen. Dadurch ist einerseits sichergestellt, daß das Fenster immer vollständig geöffnet und vollständig geschlossen wird, und andererseits gewährleistet, daß der Motor nicht überlastet wird. Aus diesem Grunde kann der Bimetall-Schalter im Motor entfallen.

Zeitbestimmend für alle Zählungen und Messungen des Mikrocomputers ist die Taktfrequenz.

Der Bereich 2 ist der sogenannte Sicherheitsbereich, in dem, ausgehend vom sogenannten 1. Meßwert durch fortlaufende Prüfungen untersucht wird, ob ein aus dem Meßwert gebildeter, die statischen und dynamischen Größen berücksichtigender Grenzwert von nachfolgend ermittelten Meßwerten überschritten wird.

Ist dies der Fall, tritt eine sogenannte Gefahrenöffnung ein, d.h. der Motor wird gestoppt und anschließend gegensinnig in Betrieb gesetzt, so daß sich das Fenster ein wenig öffnet.

Der Weg der Gefahrenöffnung des Fensters ist einstellbar. Ist das Fenster zum Zeitpunkt des Anklemmens der Bordbatterie geschlossen, so arbeitet das elektronische FH-System zu diesem Zeitpunkt bereits mit voller Sicherheit.

Ist das Fenster nach Anklemmen der Bordbatterie nicht geschlossen, so bezeichnet der Mikrocomputer zunächst diese momentane Position als "Fenster zu" und setzt den Inhalt des Positionszählers auf Null. Wird nun der Tastschalter "Fenster zu" betätigt und es findet ausgehend von dieser Position eine entsprechende Verstellung der Fensterscheibe statt, so erkennt der Mikrocomputer aus dem sich ergebenden negativen Inhalt des Positionszählers, daß das Fenster nicht geschlossen war. Für diesen 1. Schließzyklus besteht nur bedingte Sicherheit, d.h. bei Blockierung des FH-Motors erfolgt keine Gefahrenöffnung des Fensters.

Der Motor wird jedoch nach Überschreiten einer bestimmten Zeit abgeschaltet und der Inhalt des Positionszählers auf Null gesetzt.

Ist das Fenster bereits geschlossen und der Tastschalter "Fenster zu" wird betätigt, so wird der FH-Motor dadurch, daß er blockiert ist, durch den Blockierzähler (Zeit ca. 500 ms, Zeit ist aber einstellbar) abgeschaltet.

Immer wenn der Tastschalter "Fenster zu" betätigt wird, und der FH-Motor durch den Blockierzähler abgeschaltet wurde, regeneriert sich der Positionszähler, d.h. der Inhalt desselben wird auf Null gesetzt. Wird nun ausgehend von der Position "Fenster zu" das Fenster geöffnet, so werden die eingehenden Wechsel der Sensoreinrichtung im Positionszähler addiert. Bei der Betätigung der Tastschalter gibt es folgende Funktionsmöglichkeiten:

a.) Betätigung kurz (t≤0,5 s): Fenster wird vollständig geöffnet oder geschlossen. Die Endabschaltung erfolgt über den Blockierzähler.

b.) Betätigung lang (t>0,5 s): Scheibe wird solange bewegt, wie der Tastschalter betätigt wird.

c.) Gleicher Tastschalter wird ein zweites Mal betätigt, egal ob kurz oder lang: Die Fensterbewegung wird gestoppt.

d.) Betätigung des Gegen-Tastschalters: Die Funktion des der Gegenbewegung zugeordneten Tastschalters wird übernommen. (Wird z.B. während der Öffnungsbewegung der Fensterscheibe der Tastschalter "Fenster zu" betätigt, so erfolgt eine Bewegungsumkehr, d.h. das Fenster wird dann geschlossen.

Wird das Fenster geschlossen, so prüft der Mikrocomputer anhand des Positionszählers wo sich das Fenster befindet. Befindet sich das Fenster im Bereich 1, so wird bei Eintritt in dem Bereich 2, die Zeit zwischen den Flanken der von der Sensoreinrichtung zuerst gelieferten Wechsel gemessen und abgespeichert.

Aus dieser gemessenen Zeit resultiert dann ein Grenzwert, der, wird er im Bereich 2 bei einem Vergleich mit nachfolgend ermittelten Meßwerten überschritten, zur Gefahrenöffnung führt.

Befindet sich die Scheibe dagegen schon im Bereich 3, so wird die Fensterbewegung nach Überschreitung der vom Blockierzähler vorgegebenen Blockierzeit gestoppt.

Befindet sich beim Anlauf die Scheibe noch im Bereich 2, so erfolgt nach Abwarten des sogenannten Spielausgleiches (Ausgleich des Spieles im mechanischen Hebelsystem) die Übernahme des sogenannten 1. Meßwertes.

Aus diesem 1. Meßwert resultiert dann wiederum der Grenzwert, der sollte er während der Prüfungen im Bereich 2 überschritten werden, zur Gefahrenöffnung führt.

Durch Aufteilung des Fensters in diese 3 Bereiche und Messung der Geschwindigkeit des Motors ist es möglich, daß gefährdete Körperteile unverletzt bleiben und trotzdem das Fenster vollständig geschlossen werden kann. Durch die zusätzliche Gefahrenöffnung wird beim Einklemmen des Halses eine Strangulation durch das Gewicht des Kopfes an der Kante der Fensterscheibe vermieden.

Wesentliche Merkmale des beschriebenen Systems sind zusammengefaßt folgende:

1.) Digitale Erfassung der Motorgeschwindigkeit über Lochscheibe und lichtelektrische Elemente, Hall-Generator oder eine ähnliche Sensoreinrichtung im Verbindung mit einem Mikrocomputer.

2.) Positionierung dieser Sensoreinrichtung:

    1.) in oder am Fensterhebermotor,
    2.) in oder am mechanischen Hebesystem,
    3.) lochscheibenähnlicher Raster in Fensterscheibe in Verbindung mit einer Lichtschranke oder ähnlichem Sensor.

3.) Positionserkennung, die durch die Anzahl der Wechsel von der Sensoreinrichtung erfolgt.

4.) Aufteilung der Fensteröffnungswege in drei Bereiche. Daraus resultierend ein Sicherheitsbereich, der eine Gefahrenöffnung ermöglicht und ein Bereich, der ein sicheres Schließen des Fensters ermöglicht.

5.) Im Sicherheitsbereich im Gefahrenfall Gefahrenöffnung, wobei die Öffnungsweite einstellbar ist.

6.) Sogenannter Spielausgleich (Ausgleich des Spiels im mechanischen Hebesystem). Spielausgleich kann variabel gestaltet werden.

7.) Blockierzeit, die dann wirksam wird, wenn keine Wechsel mehr von der Sensoreinrichtung eingehen und zur Abschaltung des Motors führt.

8.) Lichtelektrische Sensoreinrichtung mit z.B. zwei Lichtschranken-Systemen, die eine eindeutige Drehrichtungserkennung und damit eine eindeutige Zuordnung der Wechsel unabhängig von der Bewegungsrichtung und dem damit verbundenen Nachlauf ermöglicht.

9.) Bei nicht erfolgter Meßwertaufnahme, wird im Gefahrenfall (Bereich 2) nach Überschreitung der Blockierzeit die Gefahrenöffnung veranlaßt.

10.) Nach dem Anlauf des Fensterhebermotors wird der 1. Meßwert aufgenommen. Daraus resultiert ein Grenzwert, der, wird er während einer der fortlaufenden Prüfungen überschritten, zur Gefahrenöffnung führt.

11.) Ist nach dem Anklemmen der Versorgungsspannung eines der Fenster nicht vollständig geschlossen, so gilt für den restlichen Schließweg nur bedingte Sicherheit. Bedingte Sicherheit bedeutet nur, daß keine Gefahrenöffnung erfolgt. Der FH-Motor wird trotzdem abgeschaltet.

12.) Nach jeder Blockierung in Drehrichtung "Fenster Zu" ergibt sich bei negativem Inhalt des Positionszählers eine Positionszählerrückstellung (Inhalt des Positionszählers=Null), d.h. bei evtl. Störung erfolgt eine neue Initialisierung.

**Patentansprüche**

1. Verfahren zur elektronischen Überwachung und Beeinflussung des Öffnungs- bzw. Schließzyklusses von elektrisch betriebenen Aggregaten, wie beispielsweise Fensterheber und Schiebedächer, insbesondere von Kraftfahrzeugen, wobei das an das gleichspannungsgespeiste Bordnetz angeschlossene elektrische Stellorgan des Aggregates entweder über insbesondere als Tastschalter ausgebildete elektrische Bedienelemente oder über spezifische Größen des Aggregates erfassende und verarbeitende elektrische bzw. elektronische Bauelemente beeinflußbar ist, gekennzeichnet durch die Kombination folgender Merkmale:

a) der Öffnungs- bzw. Schließweg des Aggregates wird in drei Bereiche aufgeteilt, nämlich

a1) einen ersten Bereich von völlig geöffnet bis etwa halb geöffnet,

a2) einen zweiten Bereich von etwa halb geöffnet bis fast völlig geschlossen und

a3) einen dritten Bereich von fast völlig geschlossen bis völlig geschlossen,

b) bei Öffnen des Aggregates wird der zurückgelegte Weg elektronisch erfaßt,

c) beim Schließen des Aggregates wird der erfaßte Öffnungsweg mit dem jeweils zurückgelegten, ebenfalls elektronisch erfaßten Schließweg verglichen,

d) im ersten und dritten Bereich wird lediglich der einem zeitlichen Grenzwert zugeordnete Blockierzustand des Aggregates erfaßt und bei Erreichen desselben das Stellorgan abgeschaltet und

e) im zweiten Bereich werden von der Drehzahl bzw. der Geschwindigkeit des Stellorganes oder des zugeordneten Aggregates bzw. des zugehörigen Motors abhängige Meßwerte laufend ermittelt und mit einem darauf bezogenen Grenzwert verglichen in der Art, daß bei einer Grenzwert-Überschreitung die Verstellrichtung des Stellorganes kurzfristig umgekehrt und dann das Stellorgan abgeschaltet wird.

2. Schaltungsanordnung zur Durchführung des Verfahrens nach Anspruch 1, bestehend aus elektrisch betriebenen Aggregaten, zum Beispiel Fensterheber und Schiebedächer von Kraftfahrzeugen, mit jeweils einem über Schaltelemente an das Kraftfahrzeug-Bordnetz angeschlossenen, elektrischen Stellorgan und mit einem vom Bordnetz gespeisten, die Schaltelemente beeinflussenden Mikrocomputer, dem einerseits die insbesondere als Tastschalter ausgebildeten Bedienelemente und andererseits ein eine Sensoreinrichtung umfassendes Meßsystem zugeordnet sind, dadurch gekennzeichnet, daß die Sensoreinrichtung als ein die Geschwindigkeit des Stellorganes oder des zugeordneten Aggregates bzw. des zugehörigen Motors erfassendes Bauelement ausgebildet ist und daß der mit einem Taktgeber verbundene Mikrocomputer mit Bauelementen versehen ist, die sowohl für eine durch Vergleich der von der Sensoreinrichtung gelieferten Impulse entweder mit den vom Taktgeber zugeführten Impulsen oder mit einem von einem in Abhängigkeit vom Taktgeber stehenden Blockierzähler vorgegebenen Wert erfolgenden Überwachung der Geschwindigkeit des Aggregates als auch für eine durch Abspeicherung und je nach Bewegungsrichtung durchzuführender, auf den normierten Zustand bezogener Addition oder Subtraktion der von der Sensoreinrichtung gelieferten Impulse erfolgende Erfassung des Stellweges des Aggregates vorgesehen sind.

3. Schaltungsanordnung nach Anspruch 2, dadurch gekennzeichnet, daß zur digitalen Erfassung der Motor- bzw. Stellorgan- bzw. Aggregatgeschwindigkeit, als Sensoreinrichtung eine Kombination aus Lochscheibe und lichtelektrischer Sende/Empfangs- Vorrichtung bzw. eine einen Hall-Generator aufweisende Vorrichtung vorgesehen ist.

4. Schaltungsanordnung nach Anspruch 2 und/oder 3, dadurch gekennzeichnet, daß die Sensoreinrichtung im Motor bzw. im oder am Stellorgan bzw. als mit einem am Aggregat, z.B. der Fensterscheibe oder dem Schiebedach vorhandenen, lochscheibenähnlichen Raster in Verbindung stehende, lichtelektrische Sende/Empfangs-Vorrichtung am Aggregat angeordnet ist.

5. Schaltungsanordnung nach einem der Ansprüche 2 bis 4, dadurch gekennzeichnet, daß eine Spannungsstabilisierung für die Versorgungsspannung von Mikrocomputer und Sensoreinrichtung vorgesehen ist.

**Revendications**

1. Procédé pour surveiller et agir électroniquement sur le cycle d'ouverture et de fermeture de systèmes commandés électriquement, tels que par exemple des lève-glaces et des toits ouvrants notamment de véhicules automobiles, l'organe positionneur électrique du dit système, raccordé au circuit de bord alimenté en courant continu, étant influençable soit par l'intermédiaire d'éléments de manoeuvre électriques notamment sous forme d'interrupteurs à touche, soit par l'intermédiaire de composants électriques ou électroniques captant et exploitant des grandeurs spécifiques du dit système, caractérisé par la combinaison des caractéristiques suivantes:

a) la course d'ouverture ou de fermeture du système est subdivisée en trois plages, savoir:

a1) une première plage allant de complètement ouvert à sensiblement demi-ouvert,

a2) une deuxième plage allant de sensiblement demi-ouvert à presque entièrement fermé, et

a3) une troisième plage de presque complètement fermé à complètement fermé,

b) lors de l'ouverture du système la course parcourue est captée électroniquement,

c) lors de la fermeture du système la course d'ouverture captée est comparée à la course de fermeture elle aussi captée électroniquement,

d) dans la première et la deuxième plage seul est capté l'état de blocage du système correspondant à une valeur limite de temps, et lorsque celle-ci est atteinte l'organe positionneur est arrêté, et

e) dans la deuxième plage, des valeurs mesurées qui dépendent de la vitesse de rotation ou de la vitesse de l'organe positionneur ou du système qui lui est affecté ou du moteur correspondant sont déterminées en permanence et comparées à une valeur limite rapportée à ces valeurs mesurées, de telle sorte qu'en cas de dépassement de la valeur limite le sens de déplacement de l'organe positionneur est inversé pendant un court instant puis l'organe positionneur est arrêté.

2. Montage pour la mise en oeuvre du procédé selon la revendication 1, composé de systèmes mus électriquement, par exemple des lève-glaces et des toits ouvrants de véhicules automobiles, avec pour chacun un organe positionneur électrique raccordé au circuit de bord du véhicule par l'intermédiaire d'éléments de montage, et avec, alimenté par le circuit de bord et influant sur les dits éléments de montage, un micro-ordinateur auquel sont affectés d'une part les éléments de manoeuvre conçus sous forme d'interrupteurs à touche et, d'autre part, un système de mesure comportant un détecteur, caractérisé en ce que le détecteur est conçu sous forme d'un composant qui capte la vitesse de l'organe positionneur ou du système qui en dépend ou du moteur correspondant, et en ce que le micro-ordinateur relié à un générateur d'impulsions est muni de composants qui sont prévus tant pour une surveillance de la vitesse du système effectuée en comparant les impulsions fournies par le capteur soit aux impulsions fournies par le générateur d'impulsions, soit à une valeur prescrite par un compteur de blocage qui est dans la dépendance du générateur d'impulsions, que pour une détection de la course du système, détection qui s'effectue par démémorisation d'addition ou de soustraction, rapportée à l'état normal, à exécuter en fonction de la direction du mouvement.

3. Montage selon la revendication 2, caractérisé en ce que pour capter la vitesse du moteur ou de l'organe positionneur ou du système il est prévu en tant que appareillage détecteur une combinaison formée par un disque perforé et un dispositif émetteur/récepteur photo-électrique ou un dispositif comportant un générateur de Hall.

4. Montage selon la revendication 2 et/ou 3, caractérisé en ce que le détecteur est disposé dans le moteur ou dans ou sur l'organe positionneur ou, en tant que dispositif émetteur/récepteur photo-électrique relié à un réseau analogue à un disque perforé existant sur le système, par exemple sur la glace de fenêtre ou sur le toit ouvrant, sur le système.

5. Montage selon une des revendications 2 à 4, caractérisé en ce qu'une stabilisation de tension est prévue pour la tension d'alimentation du micro-ordinateur et du détecteur.

## Claims

1. A process for the electronic monitoring and influencing of the opening or closing cycle of electrically operated units, such as for example window lift mechanisms and sliding roofs, in particular of motor vehicles, whereby the electrical actuator of the unit which is connected to a direct voltage-fed on-board supply can be influenced either via electrical operating elements, preferably designed as key switches, or via electrical or electronic components which record and process specific parameters of the unit, characterised by the combination of the following features:

a) the opening and closing path of the unit is divided into three regions, namely

a1) a first region from completely opened to about half opened,

a2) a second region from about half opened to almost completely closed and

a3) a third region from almost completely closed to completely closed,

b) when the unit is opened, the path travelled is electronically recorded,

c) when the unit is closed, the opening path recorded is compared with the particular closing path travelled, which is also electronically recorded,

d) in the first and third region, only the blocking status of the unit associated with a time limit value is recorded and the actuator is switched off when this value is reached, and

e) in the second region, measured values dependent on the rotational rate or the speed of the actuator or of the respective unit or else of the associated motor are continuously determined and compared with a limit value related thereto in such a way that whenever a limit value is exceeded, the adjustment direction of the actuator is briefly reversed and then the actuator is switched off.

2. A circuit arrangement for carrying out the process according to Claim 1, consisting of electrically operated units, for example window lift mechanisms and sliding roofs of motor vehicles, having in each case an electrical actuator connected via switching elements to the vehicle on-board supply and having a microcomputer, fed from the on-board supply and operable to influence the switching elements, allocated to which microcomputer are, firstly the operating elements designed in particular as key switches and secondly a measuring system comprising a sensor device, characterised in that the sensor device is designed as a component operable to record the speed of the actuator or of the respective unit or else of the associated motor, and in that the microcomputer, which is connected to a clock generator, has components which are operable both for monitoring the speed of the unit by comparison of pulses delivered by the sensor device either with the pulses supplied by the clock generator or with a prescribed value from a blocking counter dependent on the clock generator, and for storing the adjustment displacement of the unit by addition or subtraction with reference to the normal state, of pulses delivered by the sensor device depending on the direction of movement.

3. A circuit arrangement according to Claim 2, characterised in that the sensor device comprises a combination of perforated disc and photoelectric transmitting/receiving device or a device having a Hall generator, for digital recording of the motor or actuator or unit speed.

4. A circuit arrangement according to Claim 2 and/or 3, characterised in that the sensor device is arranged in the motor or in or on the actuator or on the unit, in the form of a photoelectric transmitting/receiving device which is associated with a perforated disc-like screen associated with the unit, e.g. the window lift mechanism or the sliding roof.

5. A circuit arrangement according to any one of Claims 2 to 4, characterised in that voltage stabilisation is provided for the supply voltage of microcomputer and sensor device.

## Fig.1

## Fig.2